# EUROPEAN PATENT APPLICATION

(11) **EP 2 409 868 A2**
(43) Date of publication of application: **25.01.2012**
(21) Application number: 11174659.0
(22) Date of filing: 20.07.2011
(51) Int. Cl.: B60J 7/10, B60J 7/12

(54) **Air tube for a system to lift the flexible roof of the loading space of a freight vehicle by inflating a bellows**

(30) Priority: 23.07.2010 NL 2005145
(71) Applicant: Bootsman Holding B.V., 2132 PX Hoofddorp (NL)
(72) Inventor: Bootsman, Gerrit, 2132 PX Hoofddorp (NL)
(74) Representative: Assendelft, Jacobus H.W.

(57) **Abstract**

System to lift the roof of the with a flexible sheet (5) covered loading space of a freight vehicle by inflating a bellows (6), comprising an air tube extending at short distance along, preferably below, the roof sheet (5), having along its length one or a plurality of air connections to the bellow (6) or assembly of bellows for lifting the roof sheet, which air tube is connected to the air source and/or drain of the system. The air tube is provided by separate length pieces, each loop shaped, e.g. U shaped, both ends of which are spatially connected to the bellow or assembly of bellows, to extend as a serpentine.

## Description

Air tube design of a system to lift the flexible roof of the loading space of a freight vehicle by inflating a bellows.

This invention relates to a system to using inflation of a bellows or such inflatable object to lift the roof of flexible sheet of a space to put said foil like roof temporary in a desired slanting position for removing water, snow or ice, or avoiding the collection of it. Thus a system to lift the flexible roof of the with a flexible sheet covered loading space of a freight vehicle by inflating a bellows. Prior art examples are e.g. disclosed in W02005065975A1, EP 0897827 or SE468279B and comprise e.g. a pneumatic hose or bellows e.g. extending across the length of the loading space closely below the roof. Such foil like roof is supported by mutually spaced cross rods resting on the opposite sidewalls of the space, such that the roof foil can sag between de cross rods / cross beams such that water, snow or ice can collect.

This problem is particularly relevant with freight vehicles. During stand still water can collect onto the sheet which can freeze to ice plates. During riding such ice plates can drop from the sheet and onto passing cars. By putting with the aid of an inflatable device the roof in a slanting position during stand still, one can prevent that water collects on top of the roof. By providing that during riding the device is deflated, the roof remains below the maximum travelling height. The advantage of having a foil roof is the ability to repeatedly collapse/retract and unfold/extend the roof, such that loading and unloading can be carried out with collapsed roof, enabling more freedom of manoeuvrability.

Such a system is operated by low pressure (typically below 1 or 0.5 bar overpressure relative to the environmental atmospheric pressure) pneumatic air, e.g. approximately 300 litres of 0.3 bar is needed for complete inflation, which is supplied by e.g. the pneumatic brake system or the air suspension of the vehicle, typically operating at pressures above 5 bar overpressure, e.g. approximately 10 bar. Times for complete inflation and deflation should be as short as possible, typically shorter then 2 minutes, for convenience of the truck driver. To meet this requirement, it is typical to have both a positive inflation (air source) and deflation (air drain). Positive deflation is typically provided by a preferably pneumatic driven suction pump, e.g. of venturi type (also known as ejector or vacuum ejector pump), an example of which is disclosed in WO9949216A1 (multi stage type, e.g. 2 or 3 staged is preferred).

Several applications of the system are feasible, particularly in or on a freight vehicle.

The object of the invention is a robust, weather insensitive and wear resistant system with a minimum number of parts and reliable operation. The inventor has determined that the unobstructed connection between the bellows and the inflation and deflation source is crucial to the reliable operation and durability of the system, in particular if used for a foil roof which is frequently folded open.

Thus the invention provides a system according to the claims below. Provided is preferably an air tube extending at short distance along, preferably below, the, preferably supple foldable or pleadable, roof sheet, having along its length one or a plurality of air connections to the bellow or assembly of bellows for lifting the roof sheet and extending in a serpentine manner along the roof sheet, which air tube is connected to the air source and/or drain of the system. Preferably the air tube extends substantially or completely outside the bellow or assembly of bellows.

By surprise it has come out that the serpentine shape is not only advantageous for the reliability and durability of the air tube, but also for the foil of the roof since such roof provided with the air tube of the invention will more easy collapse/fold and extend/unfold, since this process is aided by the air tube, in particular if the air tube is properly mounted to the foil, e.g. halfway between the cross rods and at the location of the cross rods. However also different mounting types provide such advantage, e.g. merely at the cross rods or at other spaced locations along the length of the roof, which is the direction of retracting and extending the roof.

The serpentine shape is preferably obtained since the length of the air tube between successive cross rods is larger, preferably at least 50 or 100%, then the distance between said successive cross rods, such that the air tube extends in loops along the length of the foil roof. Preferably the loops are substantially U-shaped. The loops preferably extend only at one or e.g. alternating at both sides of the imaginary line to which the free ends of the legs of all U-shaped loops connect, which connection point is preferably the location of the air connections.

Preferably remote from the air connections or free ends of the legs the air tube is mounted to the foil of the roof, preferably only at a single location between two successive air connections or cross rods or free leg ends. The air tube is preferably mounted to the foil of the roof at one or more of the air connections, cross rods, free leg ends and approximately halfway along the length between the free legs or at the bottom or curved part of the U.

Preferably the air connections are mutually in line, preferably registered at a line substantially parallel to the longitudinal direction (fore aft direction) of the freight compartment. The air tube can be continuous between the first and last air connection, or can be assembled from length parts, each part e.g. bridging the distance between two succeeding air connections or two succeeding bellows or bellows parts. In case of length parts it is also feasible that the air chamber of a bellows provides the interconnection in which case the bellows is e.g. provided with two air connections both connecting to the same air chamber of the bellows and each connected to a relevant of two interconnected length parts.

The bellows has preferably one or more of the following features: is air tight; is hose or pad like; is made of a sheath or annular or radial wall of a single or a multitude (preferably laminated to be mutually adhered/sealed across their complete surface) of material layers of which preferably a layer is a gas tight sheet or foil and/or a layer is a load bearing sheet or foil, preferably protecting the gas tight foil and preferably covering the gas tight foil on the outside; a layer, e.g. the gas tight layer, is made from polyurethane, preferably polyurethane elastomere, preferably having a Shore A hardness between 80 and 90, such as 87; a layer is made from a fibre fabric (net, braid, woven, non-woven, etc.), e.g. impregnated with a matrix such as PVC; a layer is a polymer or elastomere cladded with metal; substantially all the fibres of a layer have a strength of at least 2,000 N/mm2 (Newton per square millimetre) and/or a break yield of at least 10% or 15%; its longitudinal ends are sealed; contains between its ends, preferably approximately halfway its length, at least one, preferably two next to each other located air connections; has, if completely inflated, a regular shape, e.g. substantially parallelepiped or prismatic shape or a irregular shape e.g. with, varying width and/or height along its length, preferably continuously decreasing width and/or height from a location halfway the length towards each longitudinal end, e.g. substantially triangular or gable top like with the summit halfway the length and from there the upper face slopes downward towards both longitudinal ends like an inclined roof, while its lower face preferably extends in a single plane, horizontal in the operating position, thus high in the middle and low at the opposite ends and continuously increasing in height in between.

With a multi layer sheath for the bellows the optimum combination of gas tightness and wear resistance is obtained and also the durable connection to the air supply and drain is improved.

In case of a bellows or bellows assembly with a plurality of separate air chambers, a parallel connection or a series connection is feasible. Parallel e.g. in case the air tube is continuous and has along its length air connections, each connected to a different air chamber. Series e.g. in case the air tube is assembled from length pieces mutually connected by the air chambers, such that the air flow along the length of the air tube flows in alternating manner through a length piece, subsequently an air chamber, subsequently a length piece, subsequently an air chamber, etc.

In case a bellows extends in the length of the roof, thus covering a plurality of coss rods, there can be a single air chamber in the bellows, extending the complete length, or a plurality of air chambers extending parallel or one after the other. As an alternative there can be a plurality of mutually parallel and spaced cross bellows, e.g. one at each cross rod, each having a single or plurality of air chambers.

The bellows can be provided with an insert with two air connections, each for connection with a separate length piece of the air tube. The one or more spaced parallel bellows can extend longitudinally or in cross direction, e.g. each cross rod carries a cross bellows on its top, or one or more longitudinal bellows are carried on top of all cross rods.

The air tube preferably has an inner diameter much smaller than that of the bellows, e.g. not more than 10 or 20% of it, or e.g. not more than 15 or 30 or 50 or 100 millimetre and preferably at least 3 or 5 millimetre. Its wall thickness is preferably at least 0.5 millimetre and preferably not more then 2 or 3 millimetre, e.g. approximately 1.0 or 1.25 or 1.5 millimetre. The air tube is preferably made of Polyurethane. It preferably has a hardness Shore A between 90 and 100, e.g. approximately 98. For substantially the complete length of the roof where the roof and the air tube co-extend, the distance between the air tube and the foil roof , at completely deflated bellows and completely extended (closed) roof, is less then 3 or 5 or 10 or 20 centimetre. The diameter of the bellows is e.g. between 50 and 200 millimetre. The diameter of a top gable shaped bellows is e.g. approximately twice as high in the centre compared to the longitudinal ends, e.g. approximately 160 millimetre in the centre and approximately 85 millimetre at the ends.

The air connections have connection pipes extending parallel or perpendicular to the roof foil if completely extended, such that the air tubes connect to the air connections in a parallel or perpendicular manner. In the parallel case the air tube can extend as close as possible to the roof foil for its complete length and also the folding aid is best.

### SECOND INVENTION

Separate from or in combination with the above, another invention is to have a continuous air tube extending along the length of the foil roof, which air tube has air connections spaced along its length and connecting to the single or plurality of air chambers of the bellows or assembly of bellows, wherein the air tube connects in a manner parallel to the roof foil, if completely extended, to the air connections, e.g. in that the air connections have connection pipes extending parallel to the roof foil if completely extended. Preferably one or more of the following applies for these pipes: they extend mutually parallel; they extend parallel to the longitudinal direction of the bellows; the are oriented in the same direction; they are co-extensive; they extend adjacent each other.

Below the invention is illustrated by way of non-limiting embodiments, shown in the pictures.
Fig. 1 and 2 show a cross section of a freight vehicle;
Fig. 3 - 13 show photographs of a freight vehicle;
Fig. 14 and 15 show a perspective of an insert.

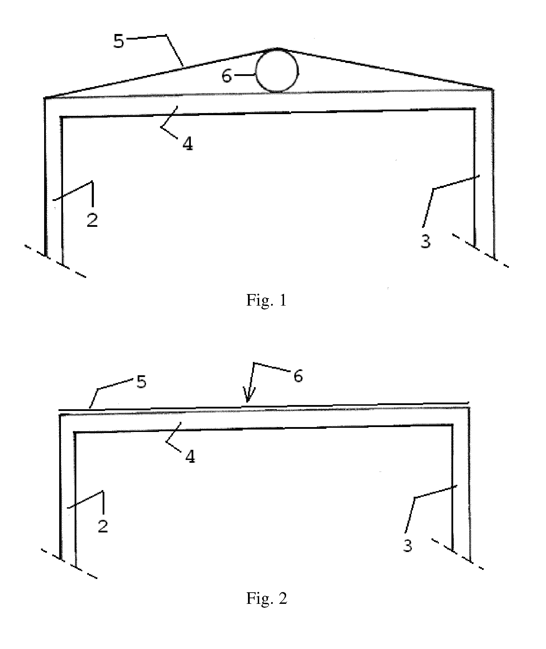

Fig. 1 shows side walls 2 and 3 supporting the cross rod 4 above which foil roof 5 lifted by completely inflated bellows 6. The direction of view is in the longitudinal direction of the roof 5.

Fig. 2 shows the same as fig. 1, however the bellows 6 is deflated, so the roof 5 rests flat onto the cross rods 4. The bellows 6 extends the complete length of the roof 5 and is supported by all cross rods 4.

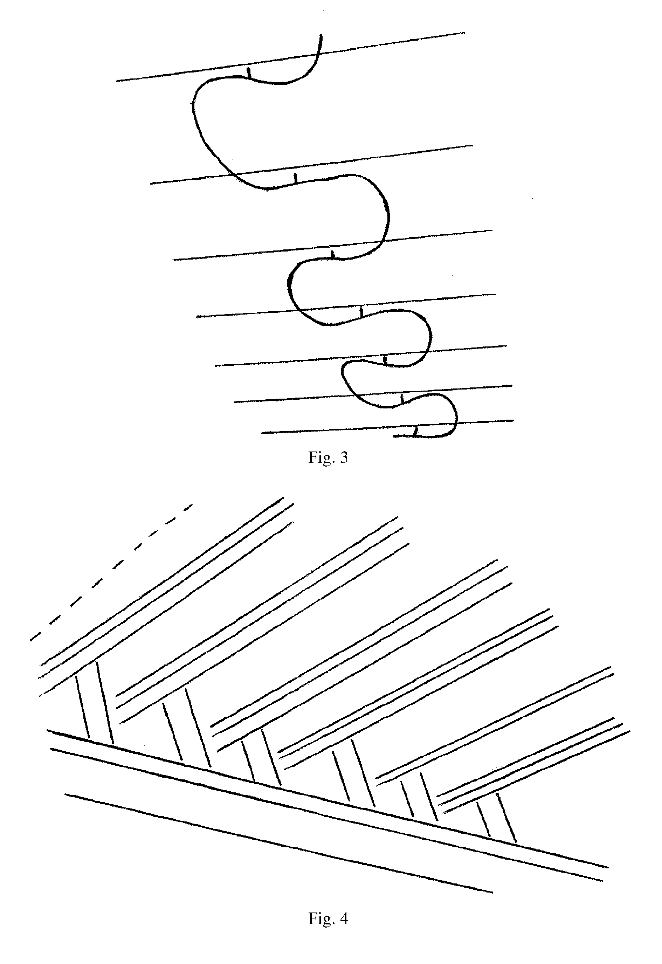

Fig. 3 shows a picture taken inside the freight space, showing the upright side walls and the under side of the foil roof resting at the regular spaced cross rods. The black serpentine line is the air tube. A longitudinal extending bellows is absent. In stead, a cross bellows extends on top of each cross rod, such that the air tube is connected to a plurality of spaced air chambers of the bellows. In this picture the cross bellows are inflated, providing a gable top or triangle shape with highest point in line with the longitudinal centre line of the roof, such that the centre of the roof is highest lifted and inclines to each side while continuously supported along the length of each cross rod. The air tube is continuous along its length and has spaced air connections along its length. The U-shaped parts alternate between the two sides of an imaginary straight line connecting all air connections.

Fig. 4 shows how the roof is folded by shifting the cross rods, resting on top of the sides, towards each other, while the foil folds itself.

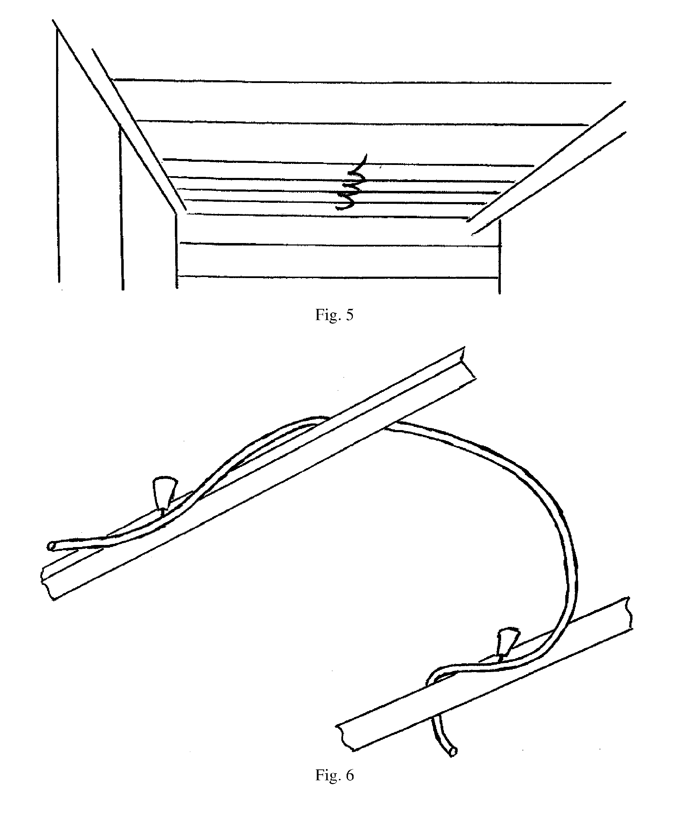

Fig. 5 shows the partly folded open roof. Fig. 6 shows a detail of fig. 3 illustrating a single air connection between the air tube and the relevant bellows at each cross rod and also a single mounting of the air tube to the roof foil at a location halfway between each two successive cross rods. The air connections have connection pipes extending perpendicular to the roof foil, such that the air tubes connect to the air connections in a perpendicular manner.

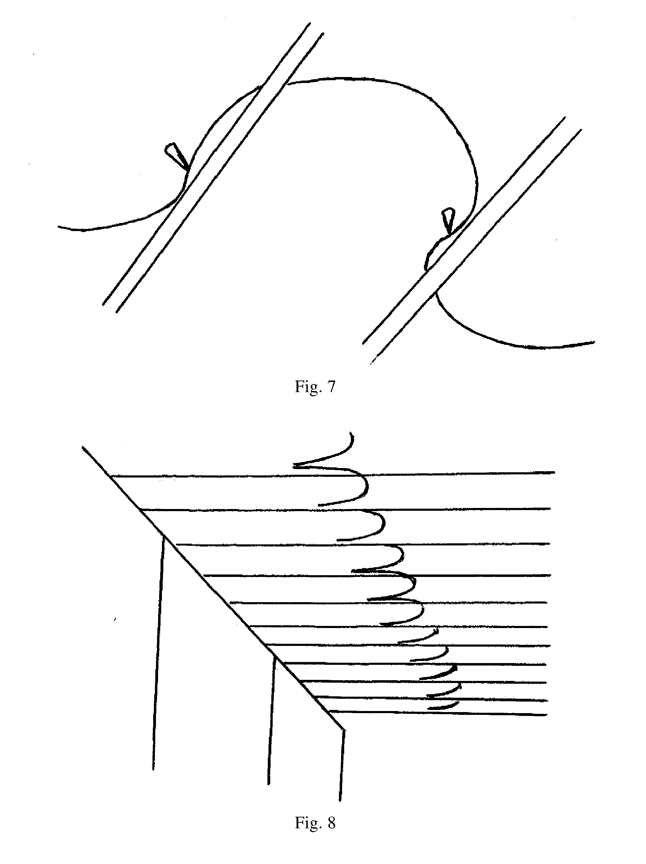

Fig. 7 is a view similar to fig. 6 also showing that the air tube crosses between the cross rod and the roof foil. This is a parallel connection embodiment.

Fig. 8 is a view similar to fig. 3, the only main difference being the different serpentine shape of the air tube, all U-shaped loops are at the same side of an imaginary longitudinal line connecting the loop ends.

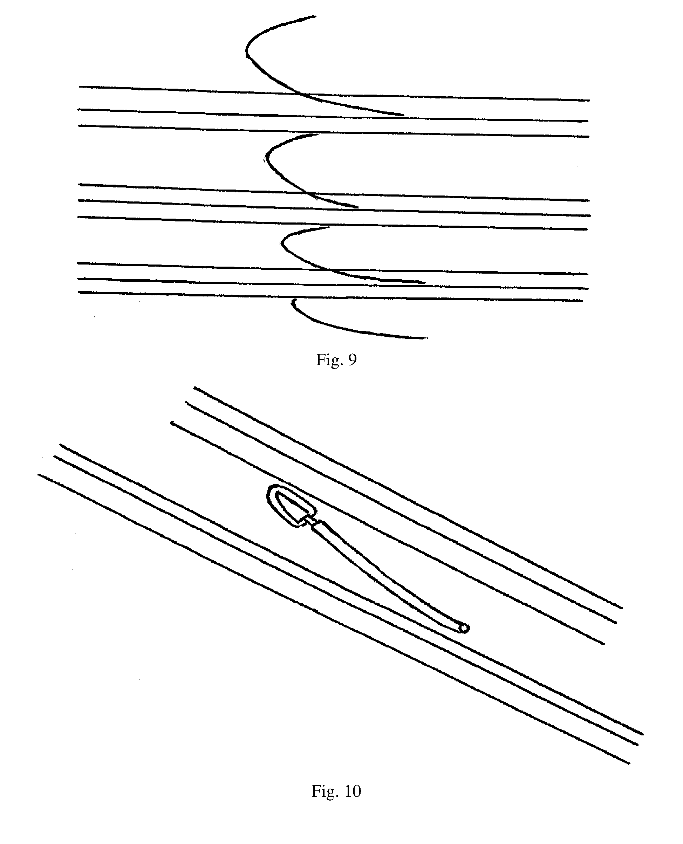

Fig. 9 shows a detail of fig. 8. The air tube is made of length parts, each bridging two successive cross bellows. The gable top shape of the inflated bellows on top of each cross rod is presented as the darker areas. This is a series connection embodiment.

Fig. 10 shows the embodiment of fig. 8 if the roof is collapsed by bringing the cross rods close to each other. The two air connections for each cross bellows are visible.

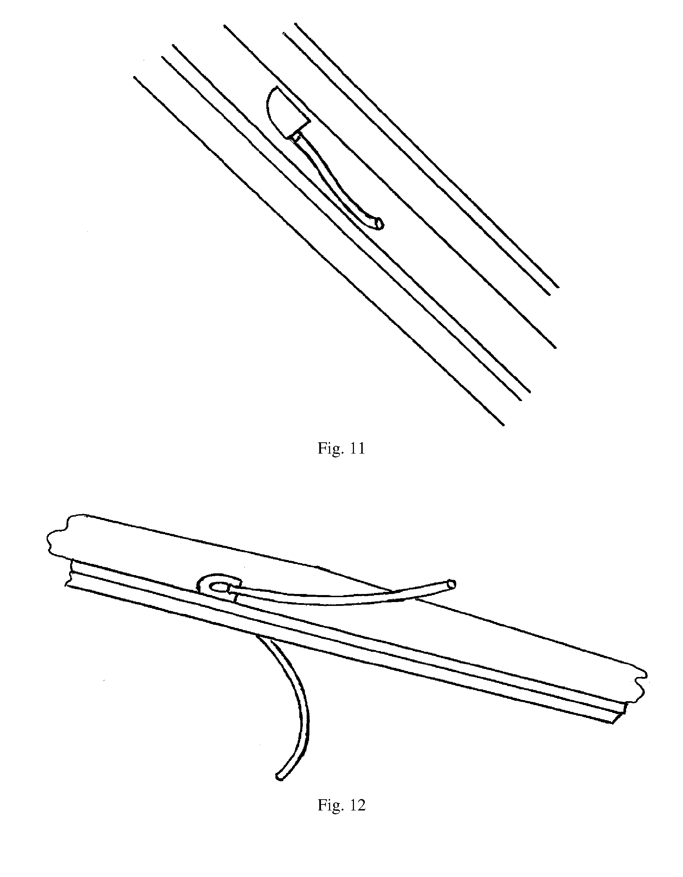

Fig. 11 shows the roof of fig. 8 in a more collapsed condition compared to fig. 10.

Fig. 12 shows a detail of fig. 8, the air connections have connection pipes extending parallel to the roof foil, such that the air tubes connect to the air connections in a parallel manner.

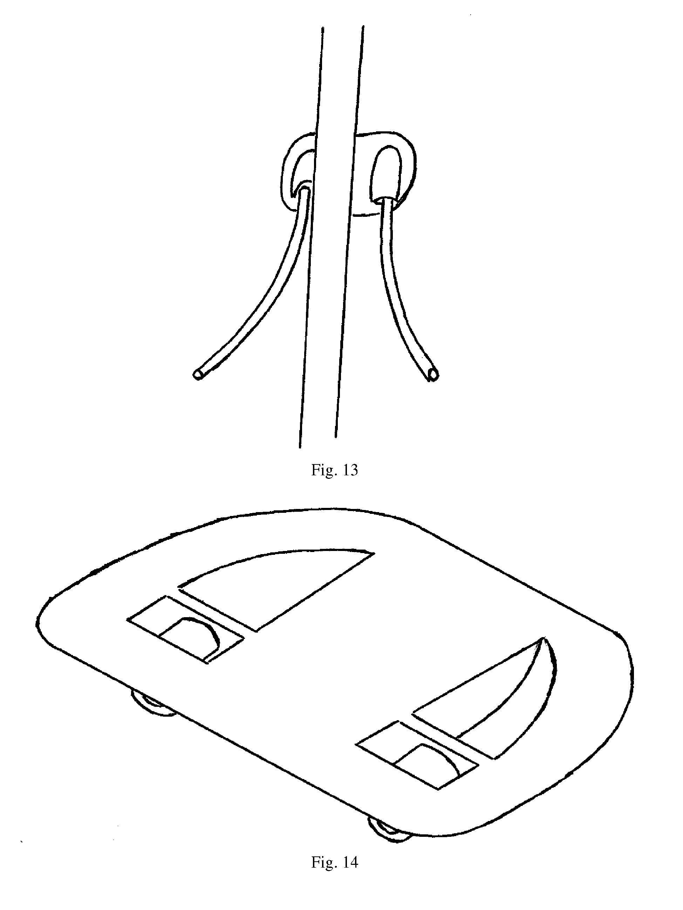

Fig. 13 is similar to fig. 12 and gives a clear view of the cross bellows on top of the cross rod and its two air connections and part of the associated two over their complete length parallel to the roof foil extending length parts of the air tube.

Fig. 14 shows of the embodiment of fig. 8 the insert providing the two air connections, viewed from the inside of the bellows, illustrating the two air passages and the roughened surface for improved adhesion with the bellows wall.

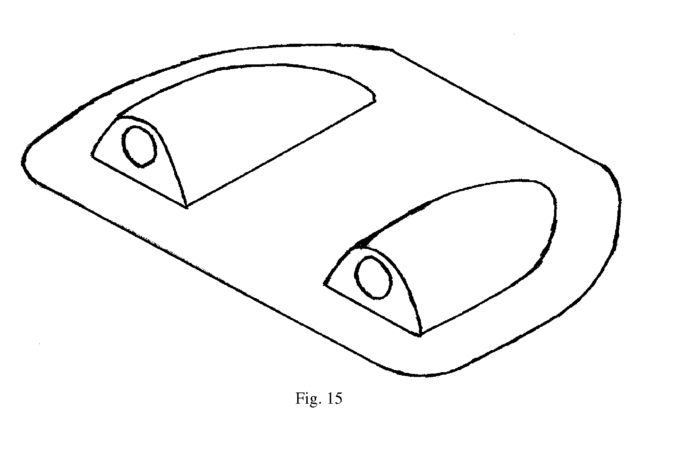

Fig. 15 shows the insert of fig. 14 from the opposite side, thus viewed from the outside of the bellows, illustrating the two parallel to the roof foil extending connection pipes that will outwardly project from the bellows wall.

Other versions belong to the invention. All described or shown in the drawing features are in themselves or in any combination the subject of this invention, even independently of their combination in the claims or their reference

## Claims

1. System to lift the roof of the with a flexible sheet covered loading space of a freight vehicle by inflating a bellows, comprising an air tube extending at short distance along, preferably below, the roof sheet, having along its length one or a plurality of air connections to the bellows or assembly of bellows for lifting the roof sheet, which air tube is connected to the air source and/or drain of the system.

2. System according to claim 1, wherein the air tube comprises or is provided by separate length pieces, each loop shaped, e.g. U shaped, both ends of which are spatially connected to the bellow or assembly of bellows.

3. System according to claim 1 or 2, wherein the air tube connects in a manner parallel to the roof foil, if completely extended, to the air connections, e.g. in that the air connections have connection pipes extending parallel to the roof foil if completely extended, and/or which air tube has air connections spaced along its length and connecting to the single or plurality of air chambers of the bellows or assembly of bellows.

4. System according to any of claims 1-3, remote from the air connections or free ends of the legs the air tube is mounted to the foil of the roof, preferably only at a single location between two successive air connections or cross rods or free leg ends.

5. System according to any of claims 1-4, the air chamber of a bellows is provided with two air connections both connecting to the same air chamber of the bellows and each connected to a relevant of two interconnected length parts of the air tube, and/or the air connections are mutually in line and the air tube extends at only one side of the line.

6. System according to any of claims 1-5, the air tube extends in a serpentine manner along the roof sheet.

7. System according to any of claims 1-6, the air tube is connected to a plurality of inserts spaced along its length, each provided with two air connections connected to the air tube.

8. System according to claim 7, an insert comprises a plate member and an elevated part projecting from the plate and containing a connection port allowing a tube to connect substantially parallel to the plate plane.

9. System according to any of claims 1-8, the air connections have connection pipes extending parallel or perpendicular to the roof foil if completely extended, such that the air tubes connect to the air connections in a parallel or perpendicular manner.

10. System according to any of claims 1-9, wherein one or more of the following applies: the bellows is connected to a system, inboard the vehicle, for filling and exhausting the bellows with fluid, preferably air, to inflate and deflate it; the bellows is supported by the roof supporting structure of the vehicle; the bellows is designed to move the roof foil between a substantially flat roof shape for minimum vehicle height and an inclined roof shape for draining ice and rain water from the roof.
